# EUROPÄISCHE PATENTSCHRIFT

(11) **EP 2 202 414 B1**
(45) Veröffentlichungstag und Bekanntmachung des Hinweises auf die Patenterteilung: **24.10.2018**
(21) Anmeldenummer: 09013993.2
(22) Anmeldetag: 07.11.2009
(51) Int. Cl.: F16B 2/12, F16B 2/06, F16B 2/02, B25B 1/24, G01B 5/00

(54) **Vorrichtung zur Halterung eines Messobjekts in einer Referenzlage**
Device for holding an object to be measured in a reference point
Dispositif destiné à la fixation d'un objet à mesurer dans une position de référence

(30) Priorität: 23.12.2008 DE 102008063018
(43) Veröffentlichungstag der Anmeldung: 30.06.2010
(73) Patentinhaber: Carl Zeiss Fixture Systems GmbH, 66636 Tholey (DE)
(72) Erfinder: Huber, Alfred, 66571 Eppelborn (DE); Junker, Franz-Rudolf, 66636 Tholey-Sotzweiler (DE)
(74) Vertreter: Bernhardt, Reinhold

(56) Entgegenhaltungen:
- DE-A1- 3 801 813
- GB-A- 158 801
- Anonymous: "Clamp (tool)", Wikipedia, the free encyclopedia , 19. November 2007 (2007-11-19), XP002729816, Gefunden im Internet: URL:http://web.archive.org/web/20071119140 833/http://en.wikipedia.org/wiki/Clamp_(to ol) [gefunden am 2014-09-12]

## Beschreibung

Die Erfindung betrifft eine Vorrichtung zur Halterung eines Messobjekts, insbesondere eines Karosseriebauteils, in einer Referenzposition, mit einem Trägerkopf und einer das Messobjekt übergreifenden und in Anlage gegen den Trägerkopf haltenden Klemmeinrichtung, die ein gegen das Messobjekt anlegendes Klemmelement und einen das Klemmelement bewegenden arretierbaren Schieber umfasst.

Aus der DE 38 01 813 A1 ist eine derartige Vorrichtung mit einer Klemmeinrichtung bekannt, deren gegen das Messobjekt anlegbares Klemmelement mit einem Kniehebel verbunden ist, der zwecks Verklemmung des Messobjekts zwischen dem Trägerkopf und dem Klemmelement verschwenkbar ist. Der Hebel ist am oberen Ende einer vertikal verschiebbaren Säule der Klemmeinrichtung angeordnet und weist an einem Ende das Klemmelement auf. Der Trägerkopf ist an der Säule gehalten und nach Lösung einer Arretierung auf der Säule vertikal verschiebbar.

Aus der GB 158 801 ist eine Vorrichtung zur Halterung eines Schuhs bekannt, welche einen Trägerkopf für den Schuh und eine den Schuh übergreifende und in Anlage gegen den Trägerkopf haltende Klemmeinrichtung umfasst. Die Klemmeinrichtung weist ein gegen den Schuh anliegendes Klemmelement und einen das Klemmelement bewegenden einrastbaren Schieber auf. Die Position des Klemmelements ist durch den Schieber relativ zu dem Trägerkopf in einer Linearbewegung des Klemmelements verstellbar, um den Schuh gegen den Trägerkopf zu verspannen.

Der Erfindung liegt die Aufgabe zugrunde, eine neue Vorrichtung der eingangs erwähnten Art zu schaffen, die eine bei verringertem Aufwand für die Verklemmung genauere Anordnung des Messobjekts in der Referenzposition ermöglicht.

Die diese Aufgabe lösende Vorrichtung nach der Erfindung ist dadurch gekennzeichnet, dass die die Klemmeinrichtung den Trägerkopf mit einem Gabelteil teilweise umgreift.

Vorteilhaft erlaubt der arretierbare Schieber eine lineare Verstellung der Position des Klemmelements, die in Bezug auf den Trägerkopf so ausgerichtet sein kann, dass keine das Messobjekt verschiebende, die Genauigkeit der Einspannposition beeinträchtigende Querkomponente auftritt.

In der bevorzugten Ausführungsform der Erfindung ist der Schieber parallel zu einer Vorschubachse des Trägerkopfes bewegbar.

In weiterer Ausgestaltung der Erfindung lässt sich die Klemmeinrichtung gegen den Trägerkopf verschwenken, vorzugsweise um die genannte Vorschubachse. Somit bestehen vielfältige Möglichkeiten zur Anordnung der Klemmeinrichtung an einer Klemmstelle und damit zur Anpassung an unterschiedliche Messobjekte.

In einer bevorzugten Ausführungsform ist der Gabelteil in einer am Trägerkopf, vorzugsweise um die Vorschubachse, umlaufenden Nut, geführt.

Der Gabelteil kann einstückig mit einem eine Schieberführung bildenden Trägerkörper ausgebildet sein.

Der Schieber umfasst vorzugsweise einen im Querschnitt kreisförmigen Bolzen. Entsprechend lässt sich die Schieberführung mit geringem Aufwand durch eine Bohrung herstellen.

Zweckmäßig ist eine zu dem Bolzen koaxiale Schraube zur Erzeugung einer Klemmkraft vorgesehen.

In der bevorzugten Ausführungsform der Erfindung weist der Bolzen ferner eine Längsnut für den Eingriff eines den Bolzen gegen Drehung sichernden Arretierungsstiftes auf.

In weiterer Ausgestaltung der Erfindung ist an wenigstens einem der Gabelschenkel des Gabelteils eine Arretierungsschraube mit einer in Richtung des freien Schenkels über die Mittelachse des Trägerkopfes hinaus versetzte Schraubenachse vorgesehen.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine an einem Trägerkopf angebrachte Klemmeinrichtung nach der Erfindung in einer teilweise geschnittenen Seitenansicht,
- Fig. 2: die Klemmeinrichtung von Fig. 1 in einer zu der Seitenansicht von Fig. 1 um 90° verdrehten Seitenansicht, und
- Fig. 3: die Klemmeinrichtung von Fig. 1 und 2 in einer Ansicht von unten.

Ein Trägerkopf 1 für die Aufnahme eines zu vermessenden Karosseriebauteils 2 lässt sich durch eine nicht gezeigte Halte- und Bewegungseinrichtung entlang einer Vorschubachse 3 in eine gewünschte Abstützposition bewegen. An den in dem gezeigten Ausführungsbeispiel rotationssymmetrischen Trägerkopf 1 ist eine Klemmeinrichtung 4 angebracht.

Die Klemmeinrichtung 4 umfasst einen Haltekörper 5 aus einer Messing-BronzeLegierung mit einem Gabelteil 6, welcher den Trägerkopf 1 über einen Teil seines Umfangs umgreift. Der Haltekörper 5 weist ferner eine Führungsbohrung 7 für einen Schieberbolzen 8 mit kreisförmigem Querschnitt auf. In der Führungsbohrung 7 lässt sich der Schieberbolzen 8 parallel zu der Vorschubachse 3 verschieben.

An einem Ende ist der Schieberbolzen 8 mit einem aus der Führungsbohrung 7 herausstehenden Gewindebolzen 9 verbunden, auf den eine zu dem Schieberbolzen 8 koaxiale Rändelschraube 10 aufgeschraubt ist. Am anderen Ende ist an dem Schieberbolzen 8 eine seitlich vorstehende Klemmplatte 11 angebracht.

Zur Verbindung der aus gehärtetem Material bestehenden Klemmplatte 11 mit dem Schieberbolzen 8 dient eine in den Schieberbolzen 8 koaxial eingedrehte Schraube 12. Zusätzlich zu der Schraubverbindung ist zwischen der Klemmplatte 11 und dem Schieberbolzen 8 eine Verbindung durch Verklebung hergestellt.

In eine in dem Schieberbolzen 8 vorgesehene Längsnut 13 greift ein gewindefreies Ende eines Gewindestifts 14 ein, der durch eine Mutter 15 in einer Gewindebohrung 16 in dem Halteteil 5 arretiert ist.

Zwischen der Rändelmutter 10 und dem Halteteil 5 ist eine das Halteteil schützende Unterlegscheibe 17 angeordnet. Die Rändelmutter 10 weist an ihrem der Unterlegscheibe abgewandten Ende einen Kopfteil 18 mit Angriffflächen für ein Drehwerkzeug auf.

An beiden Schenkeln des Gabelteils 6 des Haltekörpers 5 ist eine Bohrung für eine die Schenkel an dem Trägerkopf 1 arretierende Madeschraube 19 bzw. 20 vorgesehen.

Abweichend von der Darstellung in den Figuren kann die Schraubenachse der Madenschrauben in Richtung zu den freien Schenkelenden hin über die Vorschub- bzw. Mittelachse 3 des Trägerkopfs 1 hinaus versetzt sein, so dass der Haltekörper 5 durch die Madenschrauben 19,20 nicht nur kraft- sondern auch formschlüssig mit dem Trägerkopf 1 verbindbar ist. Auf der Innenseite der Schenkel des Gabelteils 6 verläuft ein Vorsprung 21, der in eine am Trägerkopf 1 umlaufende Ringnut 22 eingreift.

Das gegen den Trägerkopf 1 anliegende Karosserieteil 2 lässt sich an dem Trägerkopf 1 festspannen, indem die Klemmplatte 11 unter Verschiebung des Schieberbolzens 8 an das Karosserieteil 2 herangeführt und die Klemmplatte 11 durch Festziehen der Rändelmutter 10 an das Karosseriebauteil 2 herangezogen wird.

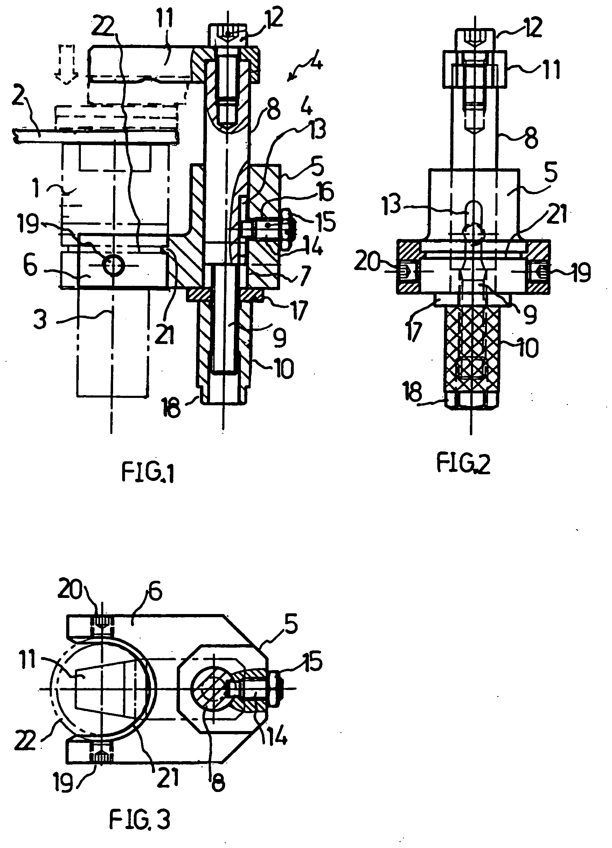

Ändert sich das Bauteil an der Einspannstelle, indem z.B. weitere Blechlagen hinzukommen, wie in Fig. 1 durch Strichlinien angedeutet ist, so kann die Klemmverbindung mit geringem Aufwand angepasst werden.

## Patentansprüche

1. Vorrichtung zur Halterung eines Messobjekts, insbesondere eines Karosseriebauteils (2), in einer Referenzposition, mit einem Trägerkopf (1) und einer das Messobjekt übergreifenden und in Anlage gegen den Trägerkopf (1) haltenden Klemmeinrichtung (4), die ein gegen das Messobjekt anliegendes Klemmelement (11) und einen das Klemmelement (11) bewegenden arretierbaren Schieber (8) umfasst,
wobei die Klemmeinrichtung (4) zur Anbringung und Halterung an dem Trägerkopf (1) vorgesehen ist und die Position des Klemmelements (11) durch den Schieber (8) relativ zu dem Trägerkopf (1) in einer Linearbewegung des Klemmelements (11) verstellbar ist,
**dadurch gekennzeichnet,**
**dass** die Klemmeinrichtung (4) den Trägerkopf (1) mit einem Gabelteil (6) teilweise umgreift.

2. Vorrichtung nach Anspruch 1,
**dadurch gekennzeichnet,**
**dass** der Schieber (11) parallel zu einer Vorschubachse (3) des Trägerkopfes (1) bewegbar ist.

3. Vorrichtung nach Anspruch 1 oder 2,
**dadurch gekennzeichnet,**
**dass** die Klemmeinrichtung (4) gegen den Trägerkopf (1), vorzugsweise um die Vorschubachse (3), verschwenkbar ist.

4. Vorrichtung nach einem der Ansprüche 1 bis 3,
**dadurch gekennzeichnet,**
**dass** der Gabelteil (6) in einer am Trägerkopf (1) umlaufenden Nut (22) geführt ist.

5. Vorrichtung nach einem der Ansprüche 1 bis 4,
**dadurch gekennzeichnet,**
**dass** der Gabelteil (6) einstückig mit einem eine Schieberführung (7) bildenden Trägerkörper (5) ausgebildet ist.

6. Vorrichtung nach einem der Ansprüche 1 bis 5,
**dadurch gekennzeichnet,**
**dass** an wenigstens einem Gabelteil (6) eine Arretierungsschraube (19,20) mit einer in Richtung des freien Schenkelendes über eine Mittelachse (3) des Trägerkopfes (1) hinaus vorstehenden Schraubenachse vorgesehen ist.

7. Vorrichtung nach einem der Ansprüche 1 bis 6,
**dadurch gekennzeichnet,**
**dass** der Schieber (8) einen im Querschnitt kreisförmigen Bolzen (8) umfasst.

8. Vorrichtung nach Anspruch 7,
**dadurch gekennzeichnet,**
**dass** eine zu dem Schieberbolzen (8) koaxiale Schraube (10) zur Erzeugung einer Klemmkraft vorgesehen ist.

9. Vorrichtung nach einem der Ansprüche 6 bis 8,
**dadurch gekennzeichnet,**
**dass** der Bolzen (8) eine Längsnut (13) für den Eingriff eines den Schieberbolzen (8) gegen Drehung sichernden Arretierungsstiftes (14) aufweist.

## Claims

1. Device for holding an object to be measured, in particular a body component (2), in a reference position, having a support head (1) and a clamping unit (4) engaging over the object to be measured and holding the latter in contact with the support head (1), which unit comprises a clamping element (11) resting on the object to be measured and a lockable slider (8) moving the clamping element (11),
the clamping unit (4) being provided to be attached and held on the support head (1), and the position of the clamping element (11) relative to the support head (1) being adjustable by the slider (8) in a linear movement of the clamping element (11),
**characterized in that**
the clamping device (4) engages partly around the support head (1) with a fork part (6).

2. Device according to Claim 1,
**characterized in that**
the slider (11) is movable parallel to a feed axis (3) of the support head (1).

3. Device according to Claim 1 or 2,
**characterized in that**
the clamping unit (4) is pivotable towards the support head (1), preferably about the feed axis (3) .

4. Device according to one of Claims 1 to 3,
**characterized in that**
the fork part (6) is guided in a circumferential groove (22) on the support head (1).

5. Device according to one of Claims 1 to 4,
**characterized in that**
the fork part (6) is formed in one piece with a support body (5) forming a slider guide (7).

6. Device according to one of Claims 1 to 5,
**characterized in that**
a locking screw (19, 20) with a screw axis projecting beyond a central axis (3) of the support head (1) in the direction of the free leg end is provided on at least one fork part (6).

7. Device according to one of Claims 1 to 6,
**characterized in that**
the slider (8) comprises a bolt (8) of circular cross section.

8. Device according to Claim 7,
**characterized in that**
a screw (10) that is coaxial with the slider bolt (8) is provided to generate a clamping force.

9. Device according to one of Claims 6 to 8,
**characterized in that**
the bolt (8) has a longitudinal groove (13) for the engagement of a locking pin (14) securing the slider bolt (8) against rotation.

## Revendications

1. Dispositif destiné à la monture d'un objet à mesurer, en particulier d'un composant de carrosserie (2), dans une position de référence, comprenant une tête de support (1) et un moyen de serrage (4) qui coiffe l'objet à mesurer et qui le maintient en appui contre la tête de support (1), qui inclut un élément de serrage (11) en appui contre l'objet à mesurer et un coulisseau (8) susceptible d'être arrêté, qui déplace l'élément de serrage (11),
dans lequel le moyen de serrage (4) est prévu pour être rapporté et maintenu sur la tête de support (1), et la position de l'élément de serrage (11) est réglable au moyen du coulisseau (8) par rapport à la tête de support (1) dans un mouvement linéaire de l'élément de serrage (11),
**caractérisé en ce que** le moyen de serrage (4) enserre partiellement la tête de support (1) avec une partie en forme de fourche (6).

2. Dispositif selon la revendication 1,
**caractérisé en ce que** le coulisseau (11) est déplaçable parallèlement à un axe de progression (3) de la tête de support (1).

3. Dispositif selon la revendication 1 ou 2,
**caractérisé en ce que** le moyen de serrage (4) est susceptible de pivoter par rapport à la tête de support (1), de préférence autour de l'axe de progression (3).

4. Dispositif selon l'une des revendications 1 à 3,
**caractérisé en ce que** la partie en forme de fourche (6) est guidée dans une gorge (22) en périphérie de la tête de support (1).

5. Dispositif selon l'une des revendications 1 à 4,
**caractérisé en ce que** la partie en forme de fourche (6) est réalisée d'une seule pièce avec un corps porteur (5) qui forme un guidage (7) pour le coulisseau.

6. Dispositif selon l'une des revendications 1 à 5,
**caractérisé en ce que** sur au moins une partie en forme de fourche (6) il est prévu une vis de blocage (19, 20), présentant un axe de vis qui dépasse en direction de l'extrémité libre de la fourche au-delà d'un axe médian (3) de la tête de support (1).

7. Dispositif selon l'une des revendications 1 à 6,
**caractérisé en ce que** le coulisseau (8) inclut un goujon (8) à section transversale de forme circulaire.

8. Dispositif selon la revendication 7
**caractérisé en ce qu'**il est prévu une vis (10) coaxiale au goujon (8) du coulisseau pour engendrer une force de serrage.

9. Dispositif selon l'une des revendications 6 à 8,
**caractérisé en ce que** le goujon (8) comporte une gorge longitudinale (13) pour l'engagement d'un téton d'arrêt (14) qui bloque le goujon (8) du coulisseau à l'encontre d'une rotation.
